# EUROPEAN PATENT APPLICATION

(11) **EP 4 810 299 A1**
(43) Date of publication of application: **23.09.2026**
(21) Application number: 26163566.8
(22) Date of filing: 10.03.2026
(51) Int. Cl.: B60L 3/00, B60L 3/04, H02M 1/32, H02H 7/122, H02M 3/158

(54) **POWER CONVERTER AND ELECTRICAL VEHICLE**

(30) Priority: 21.03.2025 GB 202504164
(71) Applicant: Fortescue Zero Limited, Kidlington Oxfordshire OX5 1GB (GB)
(72) Inventor: DOWSON, Shaun, Kidlington, OX5 1GB (GB); ALBAROSA, Alexander, London, SE3 0TY (GB); MASCARENHAS, Manuel, Kidlington, OX5 1GB (GB)
(74) Representative: Boult Wade Tennant LLP

(57) **Abstract**

There is described an electric vehicle comprising: a motor for propelling the vehicle; a battery providing motive electrical power for the motor; and a powertrain coupling the motive electrical power from the battery to the motor, wherein the powertrain comprises a switched-mode voltage converter to convert voltage of at least a portion of the motive electrical power, the switched-mode voltage converter comprising at least a pair of transistors coupled to an inductor operating as a switched energy storage element for conversion of the voltage, and an overcurrent monitor configured to detect an overcurrent condition of at least one of the pair of transistors, the overcurrent monitor configured to compare an electrical measurement of at least one of the transistors to a threshold and generate a fault signal when the overcurrent monitor receives an indication that the at least one transistor is turned on and the electrical measurement exceeds the threshold.

## Description

The present disclosure relates to a power converter and an electrical vehicle comprising the power converter, and in particular to a switched-mode power converter such as may be arranged to convert at least a portion of motive electrical power of the electric vehicle.

### Introduction

Electrical power systems in which the electrical power source is comprised of one or more battery modules are commonly used in providing motive power in vehicles, boats, small aircraft and other modes of transportation and in industrial applications such as mining vehicles and equipment. The flexibility of such systems also makes them attractive as domestic and industrial power banks. In all of these systems it is often desirable to convert between the native DC voltage output from the one or more battery modules to a different DC voltage as required by a motive unit in the vehicle or other load unit in domestic and industrial systems. It may also be desirable to convert from a DC voltage output from the one or more batteries to an AC voltage, as may occur in an inverter supplying AC voltage to the drive motor in an electric vehicle.

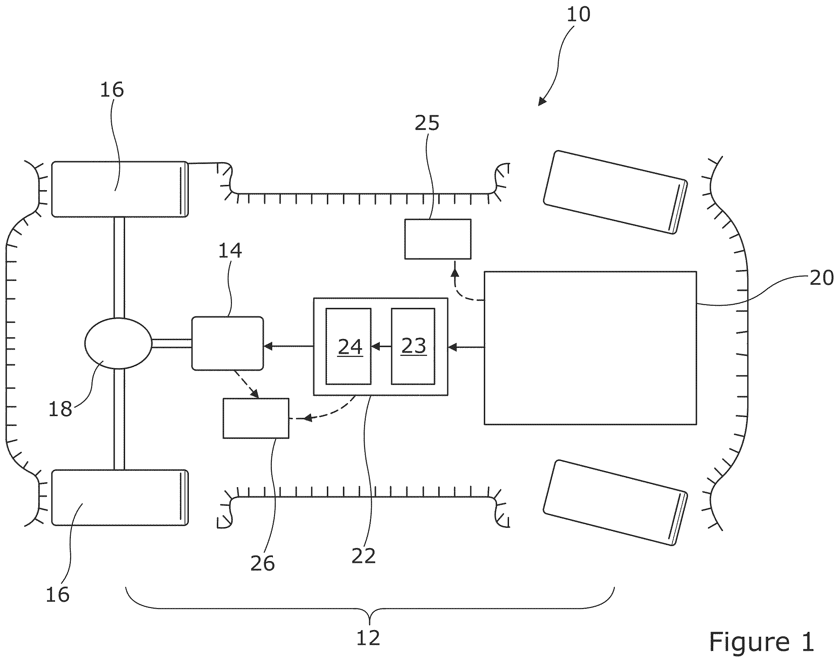

Figure 1 illustrates an electric vehicle 10 schematically in plan view. The electric vehicle 10 comprises a powertrain 12 which includes one or more electric motors 14 for driving wheels 16 or other drive elements of the vehicle, optionally via mechanical gearing 18, and one or more batteries 20 for providing motive electric current for use by the motors 14. In order to condition the motive electric current for delivery to the one or more motors 14 in the correct form, the powertrain 12 also comprises power electronics 22 which may itself comprise one or more DC-DC converters 23, one or more DC-AC inverters 24, and other elements. Various electronic systems may be provided within, and optionally at least partly externally to the electric vehicle 10, in order to provide appropriate monitoring and/or control of the powertrain, for example a battery management system 25 may monitor and maintain the condition of the batteries 20 and a powertrain electronic control unit 26 may control the power electronics 22 and motors 14.

In further detail, and as shown in figure 1, one or more batteries 20 provide DC power to one or more DC-DC power converters 23. Each of the one or more power converters 23 provides DC-DC conversion from a first voltage of the batteries 20 to a second voltage for use by the one or more inverters 24. In vehicles, the first voltage is commonly higher than the second voltage and the voltage conversion is commonly carried out by carefully controlled switching operations of power semiconductors such as MOSFETs. Inverters 24 convert the second DC voltage output from the power converters 23 to an AC voltage for supply to the motor 14 for motive driving of the vehicle. Frequently, the inverter and DC-DC power converter may be arranged to operate in both directions to either use battery power to provide motive force, or use motion of the vehicle to charge the batteries.

A key component of the DC-DC power converters and inverters are the switched power semiconductors. Failure of these power semiconductors can be caused from multiple sources. It is desirable to address problems and limitations of the prior art.

### Summary of the Invention

The present disclosure relates to apparatus and methods of preventing MOSFET drain-source current from exceeding a safe or desirable value, for example in the event of a failure in the surrounding circuits. The apparatus may be implemented in an electric vehicle.

Accordingly, the present invention provides an electric vehicle comprising: a motor for propelling the vehicle; a battery providing motive electrical power for the motor; and a powertrain coupling the motive electrical power from the battery to the motor. The powertrain comprises a switched-mode voltage converter arranged to convert the voltage of at least a portion of the motive electrical power. The switched-mode voltage converter comprises at least a pair of transistors coupled to an inductor operating as a switched energy storage element for conversion of the voltage. An overcurrent monitor is configured to detect an overcurrent condition of at least one of the pair of transistors, the overcurrent monitor is configured to compare an electrical measurement or sensing of the at least one of the pair of transistors to a threshold and generate a fault signal when the overcurrent monitor receives a signal and/or indication that the transistor is turned on and the electrical measurement or sensing exceeds the threshold. The electrical measurement may be a sensed voltage or current indicative of a voltage or current at the at least one of the pair of the transistors. In embodiments, the electrical measurement may be a sensed voltage or current based on that at a drain terminal of the at least one of the pair of transistors. The threshold may be based on a sensed voltage or current at the source terminal of the at least one of the pair of transistors. In this way the drain-source voltage or current across the at least one of the pair of transistors may be monitored.

The overcurrent monitor may be further configured to turn off the voltage converter when the fault signal is generated.

The fault signal may be latched. For example, the fault signal may be latched by storing in a memory element such as a flipflop. The latched fault signal may continue to turn off the power stage, until reset by a main system controller.

A voltage converter controller or PWM controller may be arranged to control switching of the transistors in the voltage converter. The voltage converter controller or PWM controller may be arranged to send to the overcurrent monitor the indication or signal that the at least one transistor is turned on. The indication that the at least one transistor is turned on may be a desaturation enable signal.

The indication that the at least one transistor is turned on may comprise a signal windowed between the voltage converter turning on the at least one transistor of the pair of transistors of the voltage converter and the voltage converter controller turning off the at least one transistor of the pair of transistors of the voltage converter.

The signal providing the indication that the at least one transistor is turned on may be provided after a time delay following the voltage converter controller turning on the transistors of the voltage converter.

The time delay may be less than or equal to 20ns, less than or equal to 50ns or less than of equal to 100ns.

The time interval may be adjustable.

The voltage converter controller may be arranged to receive the fault signal from the overcurrent monitor and turn off the voltage converter when the fault signal is received.

The voltage converter controller may be configured to receive a control signal controlling turn on and turn off of the transistors in the voltage converter for voltage conversion. The voltage converter controller may comprise logic circuitry arranged to invert the fault signal and perform an AND function on the control signal and the inverted fault signal such that the voltage converter controller turns off the transistor when the fault signal indicates an overcurrent condition at the transistor.

The electrical measurement or sensing of the at least one of the pair of transistors may comprise sensing or measurement of a voltage indicative or a current or voltage at an input to the transistor.

The overcurrent monitor may comprise a comparator for comparing the measured or sensed voltage to a threshold.

The overcurrent monitor may comprise a logic gate configured to perform an AND function. The logic gate may be configured to receive a first input from the comparator and a second input may be the indication that the transistor is turned on. The logic gate may be configured to provide an output, such as a high or 1 output, when the electrical measurement or sensing exceeds the threshold and the indication or signal that the transistor is turned on is received, and the output is the fault signal.

The measurement or sensing of voltage at the input to the transistor may be a measurement of voltage at the drain terminal of the transistor. The measurement or sensing may be made through a blocking diode such as using a voltage divider.

The overcurrent monitor may be configured to supply a test voltage lower than the voltage conversion voltages to perform the electrical measurement or sensing when electrical power is not supplied to the voltage converter from the battery and test the at least one transistor. The test voltage may be pulsed on at any time whether the battery power is turned on or not. This may be in combination with pulsing the signal indicating that the transistor is turned on. In this way the transistor may tested be pulsed for testing even when the battery is off, effectively providing continuous monitoring of the power converter.

The test voltage may have a magnitude less than 50V, such as between 10 and 30V, or around 20V.

The transistors may be MOSFETs, such as SiC MOSFETs.

The voltage converter may be a buck-boost voltage converter.

The voltage converter may be a DC-DC converter or an inverter.

The present invention further provides a switched-mode voltage converter, comprising: at least a pair of transistors coupled to an inductor, the inductor operating as a switched energy storage element for the conversion of the voltage, and an overcurrent monitor configured to detect an overcurrent condition of at least one of the pair of transistors, the overcurrent monitor configured to compare an electrical measurement or sensing of at least one of the pair of transistors to a threshold and generate a fault signal when the overcurrent monitor receives a signal or indication that the at least one transistor of the pair of transistors is turned on and the electrical measurement or sensing exceeds the threshold. The voltage converter may further comprises any one or more of the features set out in the preceding paragraphs relevant to the voltage converter of the vehicle.

The present invention further provides a method of overcurrent control in a switched-mode mode voltage converter converting of at least a portion of motive electrical power in the powertrain of an electric vehicle, the switched-mode voltage converter comprising at least a pair of transistors coupled to an inductor operating as a switched energy storage element for conversion of the voltage, the method comprising: comparing an electrical measurement of at least one of the pair of transistors to a threshold; generating a fault signal when an enable signal indicates that the at least one of the pair of transistors is turned on and the electrical measurement exceeds the threshold.

The method may further comprise turning off the at least one of the pair of transistors when the fault signal is generated.

The present invention further provides an electric vehicle comprising: a motor for propelling the vehicle; a battery providing motive electrical power for the motor; and a powertrain coupling the motive electrical power from the battery to the motor, wherein the powertrain comprises a switched-mode voltage converter arranged to convert voltage of at least a portion of the motive electrical power, the switched-mode voltage converter comprising at least a pair of transistors coupled to an inductor operating as a switched energy storage element for conversion of the voltage, and an overcurrent monitor configured for continuous detection of an overcurrent condition of at least one of the pair of transistors, the overcurrent monitor configured to compare an electrical measurement of the at least one of the pair of transistors to a threshold, the overcurrent monitor providing a test voltage for performing an electrical measurement of the at least one of the pair of the transistors when power is not supplied to the voltage converter from the battery (or motor), the electrical measurement performed when the transistor is pulsed on by a controller, and generating a fault signal when the transistor is pulsed on and the electrical measurement exceeds the threshold. The voltage converter with overcurrent control may alternatively provided in scenarios different to an electric vehicle powertrain.

The present invention may be used in a wide variety of MOSFET situations, including switched-mode power converters such as DC-DC buck-boost, AC-AC, AC-DC and DC-AC converters. Applications include automotive and mining vehicle powertrains, solar and wind power conversion, and large power storage systems.

### Brief summary of the drawings

Embodiments of the invention will now be described, by way of example only, with reference to the drawings of which:
Figure 1 illustrates an electric vehicle showing a powertrain for the vehicle;
Figure 2 is a detailed circuit diagram of a DC-DC voltage converter;
Figure 3 is a circuit diagram of overcurrent monitor according to embodiments of the present invention;
Figure 4 is a logic table showing the outputs for 0 /1 inputs from the PWM controller combined with 0/1 values for a fault signal;
Figure 5 is a timing diagram showing the turning on and off of various voltages related to PWM control and detection of overcurrent;
Figure 6 is a flow chart of a method of detecting overcurrent in a power converter according to embodiments of the present invention; and
Figure 7 is a logic table showing when the Fault signal is generated (as high) based on the value of the ENABLE signal and drain voltage.

### Detailed description of embodiments

As already mentioned, the present disclosure relates to the challenge of preventing current through one or more transistors from exceeding a safe or desirable value in a voltage converter circuit, such as may be found in an electric vehicle. In a particular example, the transistor is a MOSFET and the current is the drain-source current. The drain-source current may exceed a safe voltage in the event of a failure in the surrounding circuits. The result of such failures is that the drain-source current, and therefore also the drain-source voltage across the MOSFET rises. The present disclosure provides solutions for detecting the rise in the voltage to a level which is indicative of failure requiring action in the form of turning the MOSFET off (and preferably leaving it off). Simply detecting an over voltage, however, is not enough, because the voltage is already at a high level whenever the MOSFET is switched off.

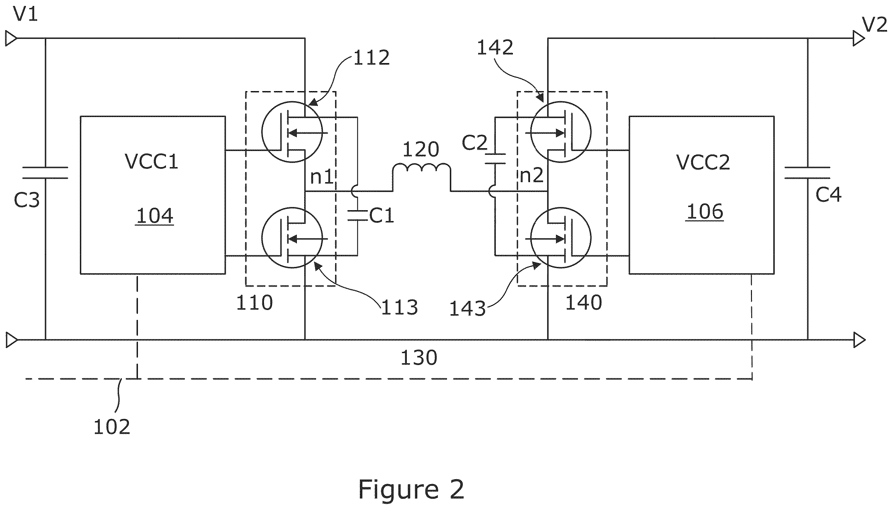

Before describing the invention in detail it us useful to consider the circuit diagram of a DC-DC voltage converter 23, as shown in figure 2. Multiple such voltage converters may be arranged in parallel to step down or step up a voltage. By arranging the voltage converters in parallel the voltage handled by the converters may be spread across the converters such that the total voltage handled by all the converters in parallel is greater than that handled by each individually. This allows higher voltages to be handled without damaging the voltage converters.

In the circuit diagram of figure 2 the voltage converter is shown as a buck-boost converter. Other voltage converters may be used and the invention described herein may be correspondingly applied to them. Although we generally consider the voltage conversion provided by the converter shown in figure 2 to be conversion from the voltage V1 rail on the left to voltage V2 on the right, which is the case when power is being supplied to drive the motor, the voltage converter may also operate in reverse to charge batteries.

The buck-boost converter may be a four transistor type buck-boost converter and is preferably a four MOSFET type buck-boost converter. Instead of the MOSFETs, other power converter components or switching units could be used such as other types of transistors. However, for the applications described herein MOSFETS are preferred, and in particular SiC MOSFETs because they are faster switching than Si MOSFETS which results in a higher power transfer efficiency. In figure 2 the four MOSFETs are identified by reference numbers 112, 113, 142 and 143. The other main component of a buck-boost converter is a reactance component which in figure 2 is inductor 120.

The four MOSFETs are arranged in two pairs. A MOSFET module 110 comprises first pair of MOSFETs 112 and 113. A second MOSFET module 140 comprises second pair of MOSFETs 142 and 143. Two voltage converter controllers, VCC1 and VCC2, are shown in the figure and identified by reference numbers 104 and 106. These may alternatively be known as power converter controllers.

The voltage converter controller 104 sends signals to the first MOSFET module 110 to control the turning on and turning off of the MOSFETs 112, 113, for the switched-mode voltage conversion. The voltage converter controller 106 sends signals to the second MOSFET module 140 to control the turning on and turning off the MOSFETs 142, 143, for the switched-mode voltage conversion. The voltage converter controllers 104, 106, receive signals regarding voltage as demanded by a main controller in response to vehicle and driver requirements. The voltage converter controllers may form part of a PWM controller.

The MOSFETs in each pair of MOSFETs are connected in series. Inductor 120 is connected at one side to a first node n1 between the two MOSFETs 112 and 113 of the first MOSFET module. The other side of the inductor is connected to a second node n2 between the two MOSFETs 142 and 143 of the second MOSEFT module.

The buck-boost converter arrangement is configured to convert from a first voltage V1, which is shown on the left hand side of figure 2 as the voltage on the top left hand power rail/line, to a second voltage V2, which is shown on the right hand side of figure 2 as the voltage on the top right hand power rail/line. MOSFET 112 is configured with its drain terminal connected to the V1 voltage and its source terminal connected to node n1 which is in turn connected to the drain of MOSFET 113. The source of MOSFET 113 is connected to ground rail/line 130. The gates of MOSFETs 112 and 113 are controlled by signals from voltage converter controller 104, which may be supplied to the MOSFETs via a MOSFET module circuit board which forms part of MOSFET module 110. On the left hand side of the circuit diagram may be capacitor C3 which is connected between the V1 voltage rail and ground rail 130. The capacitor C3 is an output smoothing capacitor to smooth ripples in voltage on the V1 rail, particularly when power is returned to the V1 rail. Additionally, a capacitor C1 is connected from the drain terminal of MOSFET 112 to the source terminal of MOSFET 113. Capacitor C1 is a snubber capacitor and is for suppressing voltage spikes and ringing which may arise when the MOSFETS are turned on and off.

The right hand side of figure 2 is a partial mirror of the left hand side. MOSFET module 140 comprises MOSFETs 142 and 143. MOSFET 142 is configured with its drain terminal connected to the V2 voltage and its source terminal is connected to node n2 which is in turn connected to the drain of MOSFET 143. The source terminal of MOSFET 143 is connected to ground rail/line 130. The gates of MOSFETs 142 and 143 are controlled by signals from the voltage converter controller 106, which may be supplied to the MOSFETs via a MOSFET module circuit board which forms part of MOSFET module 140. At the far right of the circuit diagram may be capacitor C4 which is connected between the V2 voltage rail and ground rail 130. The capacitor C4 is an output smoothing capacitor to smooth ripples in voltage on the V2 rail, as power is supplied to the V2 rail. Additionally, a capacitor C2 is connected from the drain terminal of MOSFET 142 to the source terminal of MOSFET 143. Capacitor C2 is also a snubber capacitor and is for suppressing voltage spikes and ringing which may arise when the MOSFETs are turned on and off. Sensors may be provided on both sides of the circuit for measuring various voltages, currents and temperatures.

Figure 2 also shows control line or bus 102 for sending control signals from a main controller to the voltage converter controllers 104, 106.

We now describe operation of the buck-boost converter. The MOSFETs are turned on in pairs. When the MOSFETs 112 and 143 are turned on, the voltage V1 is applied across the inductor 120 and energy is stored in the inductor. Current flows and increases following turn-on, with the current flowing through MOSFET 112, inductor 120 and MOSFET 143. During this time MOSFETs 113 and 142 are turned off. The switching of the pairs of MOSFETS are complementary such that when the MOSFETs 112 and 143 are then turned off, the MOSFETs 113 and 142 are turned on. When this occurs the stored energy in the inductor results in current flowing via MOSFETs 113 and 142. After switching on the MOSFETS 113 and 142 (and switching off MOSFETs 112 and 143) the current will slowly reduce. By this and other operation of the switches the buck-boost converter operates similar to a switched mode power supply and can be used to increase or decrease the voltage. In particular, operation is that of a buck-boost bi-directional converter and may operate in voltage, current or power control mode.

The converter arrangement of figure 2 can be used to output a voltage on the V2 rail that is higher or lower than that on the input voltage rail V1 (i.e. to step-up or step-down), and power can flow in either direction. Example voltages for V1 and V2 may be 1500V and 2100V, or 1500V and 700V. The multiple stages may be configured to handle from 100s of kW to 10 MW such as 600kW or 3MW peak powers.

A challenge with the circuit of figure 2 is in preventing MOSFET drain-source current from exceeding a safe or desirable value, which may occur in the event of a failure in surrounding circuits. Possible failures may include electrical shorting or other failures in the load, transients or other overvoltage events in the battery power supply, controller error controlling the MOSFETs so that both legs are open at the same time (known as "shoot through"), inductor saturation, switching cycles too long so that the inductor builds too far, and potential failure of another MOSFET in the converter such as in the other leg.

Prior to the use of SiC MOSFETs, Si insulated gate bipolar transistors (IGBT) transistors were used. However, the high switching speed and power handling capabilities of SiC MOSFETs means they are increasingly being used in preference to Si IGBTs. SiC MOSFETs have different, more stringent, short circuit protection requirements. The smaller device area of the SiC MOSFET die means it is less able to dissipate heat in overcurrent events, and such heating can cause destruction of the die. Furthermore, SiC MOSFETs operate differently to IGBT transistors. An IGBT operates in a saturation region when turned on in normal operation. In an overcurrent condition the current increases in a desaturation region but is to a degree self-limited. The better thermal dissipation characteristics of an IGBT over a MOSFET also mean that overcurrent protection circuits have sufficient time to turn on.

Conventionally, for IGBTs overcurrent protection circuits are based on R-C circuits. This means the protection circuits can be configured to turn on relatively slowly. Turning on quickly is undesirable because the voltage levels are high whenever the IGBT is switched off. Hence, an R-C circuit arrangement for desaturation detection provides a time delay in reading drain voltage. The sensed drain voltage is input to a comparator to check if the voltage exceeds a threshold. Desaturation detection techniques for IGBTs are well-studied, but the delay is hard-wired into the circuitry and may be subject to drift, error and inaccuracy.

SiC MOSFETs operate differently to IGBTs. SiC MOSFETs operate in a linear ohmic region during normal on operation and during an overcurrent event the current builds rapidly. Furthermore, the smaller die size means the device will heat up more rapidly. This means an R-C protection circuit as used for IGBTs would need to react more quickly and with reduced delay. However, MOSFETs may have switching noise that persists for some nanoseconds after turn on, which means if the time constant of the R-C circuit is reduced too much then the transients of the switching noise will be detected as an overcurrent condition. Hence, it is desirable to implement an improved overcurrent protection circuit for SiC MOSFETs.

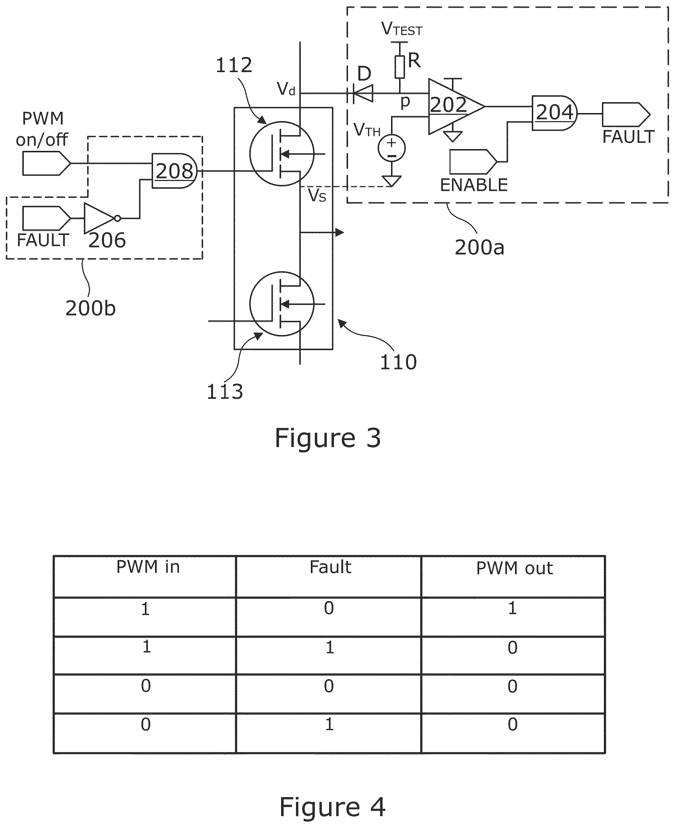

Figure 3 shows an overcurrent monitor 200 according to embodiments of the present invention. The overcurrent monitor may comprise two parts. A first part 200a of the overcurrent monitor may be the monitor or overcurrent detection side. A second part 200b of the overcurrent monitor may be used to provide feedback to control the switching of the MOSFETs. Although MOSFETs do not have a desaturation region in the same way as IGBTs, it is common to use the term desaturation regarding corresponding overcurrent conditions.

The overcurrent monitor 200 as shown in figure 3 may be applied to any of the MOSFETs, transistors or other power converter units in the switched-mode voltage converter. For example, the overcurrent monitor 200 may be applied to any of the MOSFETs 112, 113, 142 and 143 in figure 2. In the example of figure 3 the overcurrent monitor is applied to the MOSFET 112 of MOSFET module 110. Not shown in figure 3 are various other components of the voltage converter of figure 2, including the inductor, capacitors and other two MOSFETs. The overcurrent monitor 200 comprises a comparator 202 arranged to receive two inputs. A first input is a measure of the voltage, V_{d}, at the drain terminal of the MOSFET 112. This is measured using a voltage divider comprising a resistor R and diode D, as shown in figure 3. Resistor R is connected at one side to a voltage source, V_{TEST}, which may for example be around 20V above the expected voltage at the source terminal of the MOSFET 112. The drain voltage V_{d} when the battery is turned on may be around 1500-2000V. The other side of the resistor is connected to a node p which is connected to both the first input of the comparator and a Diode D. Diode D is a blocking diode, such as a Zener diode, which is connected to the drain terminal of the MOSFET 112. The diode is connected in a reverse direction to prevent the comparator seeing the drain voltage when the MOSFET is turned off (and the battery is turned on). The second input of the comparator is connected to a voltage supply, indicated in figure 3 as V_{TH}, which is set relative to the voltage Vₛ at the source terminal of the MOSFET 112. This voltage is used for comparing against the voltage measured at node p by voltage divider. The value of V_{TH} may be set around 4V (when the battery and MOSFET are turned on in normal use). Although 4V is normal for V_{TH}, the value can be changed to set the exact current level required to trip a fault. The voltage V_{TH} may be set using a second voltage divider arrangement. The comparator may be set up so that the logic output is high when the first input, from node p of the voltage divider, is greater than (or equal to) the second input V_{TH}. In this way the comparator is detecting when the voltage between the drain and source terminals of the MOSFET exceeds a certain value, which may be indicative of high levels of current passing through the MOSFET, such as in a short circuit elsewhere in the voltage converter.

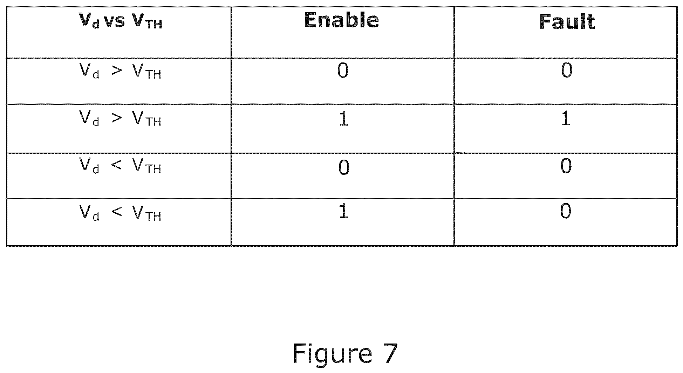

The overcurrent monitor further comprises an AND logic gate 204. The output from the comparator 202 is fed to one of the inputs of the AND gate. The other input of the AND gate is provided with an ENABLE signal. The ENABLE signal may be turned off and on, and may be received from a controller, such as a controller of the voltage converter or a PWM controller. When the ENABLE signal is turned on or goes high, the output from the AND gate is the same (high or low) as the output from the comparator. When the ENABLE signal goes low, the output of the AND gate is also low. This operation is summarised in the logic table of figure 7. In figure 3 the output from the AND gate 204 is labelled FAULT. Hence, a FAULT signal is only output when an ENABLE signal is received and the detected drain voltage is higher than the voltage V_{TH}.

On the input side of the MOSFET module 110, a pulse width modulation, PWM, signal is applied to the MOSFET 112 to turn the MOSFET on/off for the desired supply to the inductor and voltage conversion. Returning to figure 2 the four MOSFETs will all receive appropriately timed PWM signals to turn on/off the MOSFETs as required for the desired voltage conversion. In the arrangement of figure 3 the PWM signal is sent through an AND gate 208. The FAULT signal received from AND gate 204 at the monitoring side 200a of the overcurrent monitor is supplied to the control side of the MOSFETs at 200b of the overcurrent monitor. The control side of overcurrent monitor 200b comprises an inverter or NOT gate 206, and a further AND gate 208. The FAULT signal is passed through NOT gate to invert it and then to one of the inputs of the AND gate 208. The other input of the AND gate is the PWM on-off signal to the MOSFET 112. As described earlier the FAULT signal is high when the MOSFET is turned on and the voltage at the drain terminal of MOSFET exceeds a threshold. After the signal is inverted and combined with the PWM on/off signal at the AND gate 208, the effect is as shown in the logic table of figure 4. The PWM signal is modified by the AND gate 208. The PWM signal would normally switch on and off as required for voltage conversion. However, the AND gate 208 modifies this such that if an overcurrent fault condition is detected, the MOSFET is not turned on. This can be seen in the table of figure 4, that when the "PWM in" signal is high and there is a fault, the "PWM out" signal is low. By applying the outcome of the overcurrent monitor to the MOSFET PWM control signal for the same MOSFET, the control is local and direct meaning that other MOSFETs or power converters may continue to operate.

The ENABLE signal applied to AND gate 204 in the monitor and detection part 200a of the overcurrent monitor may be set with specific timing. As discussed previously, MOSFETs may take time to settle after turn-on so detecting an overcurrent condition straight after turn on may result in false positives. The ENABLE signal may be provided from the voltage converter controller (PWM controller) and timed to accurately follow a PWM turn-on by a specified time interval or delay. In a preferred arrangement the delay may be around 50ns, although shorter or longer may be used such as around 20ns or around 100ns. The delay may be set as a fixed time interval, and may be set following tests to determine the best delay for a particular design of power converter under designed load ranges. In some embodiments the delay may be set dynamically and may be adaptable, for example, to load and other conditions.

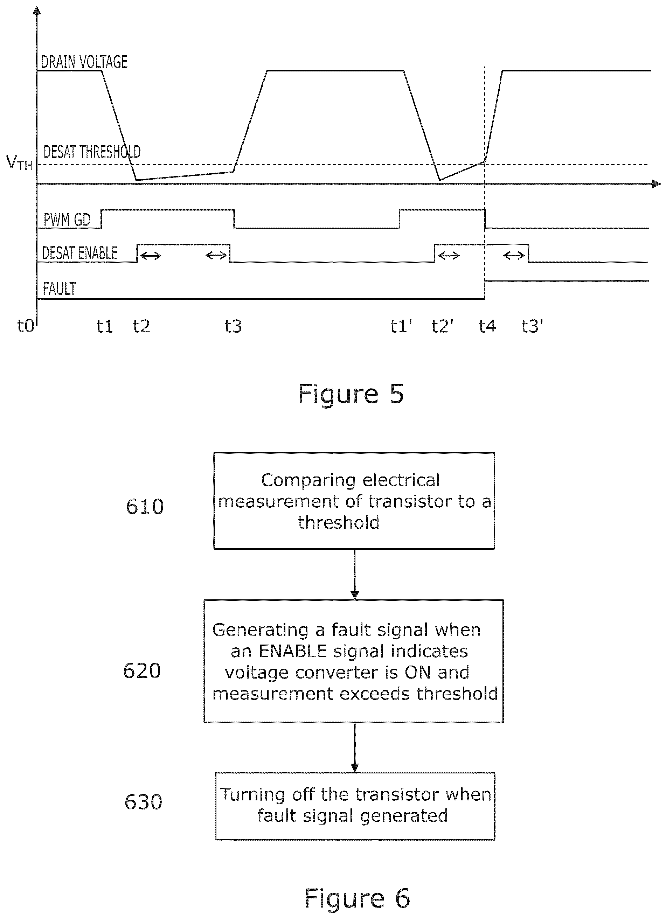

Figure 5 is a timing diagram showing the turning on and off of various voltages. At time t0, the MOSFET is off as can be seen by the drain voltage being high and the gate driver signal, PWM GD, being low. At time t1 the PWM signal turns on, as shown by PWM GD going high, and the MOSFET drain voltage falls. The MOSFET drain voltage continues to fall and goes below V_{TH}. This fall time may be around 30ns. At time t2, after the MOSFET voltage has stabilised and the drain voltage has dropped, the ENABLE signal is turned on (indicated by DESAT ENABLE in figure 5). This ENABLE signal is asynchronous with the PWM GD signal turning on. The overcurrent monitor is now monitoring for overcurrent at the MOSFET. The drain voltage increases slightly over the time following t2. This may be due to heating in the device, or more typically, increasing inductor current, which increases the drain current of the MOSFET. At time t3 the PWM signal turns off the MOSFET as shown by the PWM gate driver signal, PWM GD, going low. The drain voltage ramps back up to the high level, and the ENABLE signal is also turned off at the same time as the gate driver signal goes low. At time t1' the cycle starts again with the gate driver PWM GD signal turning on the MOSFET. The overcurrent monitor is turned on after the delay, at time t2'. However, in this cycle the drain voltage increases above the V_{TH} monitor threshold voltage, indicating that there is an overcurrent condition through the MOSFET. At the time t4 when the overcurrent monitor detects that the drain voltage has exceeded V_{TH}, the overcurrent monitor generates or turns on the FAULT signal and the PWM gate driver signal is turned off to shut down the MOSFET. The ENABLE signal may continue to stay on until the PWM cycle ends and is turned off by the voltage converter controller.

Typical MOSFET switching times may be around 10-25 kHz, and typical rise times for the current once turned on in SiC devices may be around 30 ns.

As mentioned, the overcurrent monitor is always active once turned on by the ENABLE signal. This means the MOSFET can be switched off very quickly. This reduces any settling time and increases the speed at which an overcurrent condition can be removed, for example in comparison to an RC circuit which may take time to react due to its time constant. This improved reaction speed is a particular benefit of this invention, thereby providing faster turn-off in overcurrent conditions.

In the embodiments described, the overcurrent monitor does not use an R-C circuit as in the prior art. Instead the monitor voltage source, V_{TEST}, and the comparator may be always active. The blocking diode isolates the comparator from the drain voltage (which may be 1500-2000V) when the MOSFET is off which adds to stability of control.

In a further aspect of the invention, the same overcurrent monitor circuit can also be used to conduct power converter boot-up tests without any high voltage provided from the battery. In this case, with reference to figure 2, the voltage on the voltage rail V1 may be zero as it is before turn on of the battery. We previously mentioned that V_{TEST} may be set at around 20V above the voltage at the source terminal of the MOSFET. This around 20V supply as V_{TEST} to the overcurrent monitor is on its own sufficient to turn on the MOSFET. Hence, it can effectively be used to check if the MOSFET turns on as expected when an on signal is applied to the gate such as from PWM control. Thus the around 20V may be applied to the drain of the MOSFET, because the direction of conduction of the diode D permits this. Hence, by providing a single short PWM pulse of for example just a few milliseconds to each MOSFET in turn, they can be used to check that each MOSFET is responding correctly to the gate driver PWM GD signals and is not entering an overcurrent condition, for example when the battery is off. The power converter may and open and close its MOSFETs to detect if the 20V is pulled to ground via resistor divider to check that each MOSFET is operating correctly. As in usual operation, if a overcurrent is detected, a high fault signal is sent to the AND gate 208 which when the time comes to turn on the MOSFET with the PWM ON/OFF or PWM GD signal, will stop the gate from being turned on because the output from the AND gate 208 will be low.

An effect of normal and boot-up operation of the overcurrent monitor is that when there is a fault detected, the fault signal can continue to be provided to the gate driver or PWM control signal (so as to prevent turning on of the MOSFET), such that the fault signal may be considered to latched. This may be achieved by storing the fault signal in a memory. For example, the fault signal may be fed into a flip flop, which latches the fault signal, until it is reset by the main system controller (for example, when the fault has been rectified). This is a further difference to the prior art which would effectively turn on the MOSFET each time and wait for the RC time to elapse before detecting the fault and turning off. Hence, prior art approaches would be more likely to result in further and continued damage to the MOSFET.

In the arrangement described above, the comparator 202 may be an op-amp. Other embodiments may use other components for the comparison and functions of the logic gates, such as using a microprocessor and A-D conversion.

We have described an overcurrent monitor for a MOSFET 112. A separate overcurrent monitor circuit may be provided for each MOSFET. For example, a second overcurrent monitor circuit may be provided for the other MOSFET 113 in the MOSFET module 110. Four overcurrent circuits may be provided for the voltage converter 23 of figure 2, and each such converter may similarly have such monitor circuits.

As described earlier, the MOSFETs are typically implemented in a MOSFET module in paired units of two MOSFETs or MOSFET clusters (in the latter each MOSFET is actually formed of several in parallel controlled identically), with high voltage/power connections for drain, source, and inductor. The gate driving signals may come from an interface board comprising MOSFET driver circuits (which may include amplifiers) sitting right on the MOSFET module. A lower power gate driver board may be provided to receive control signals from a remote controller and to pass these to the interface board, these control signals for example including PWM timings which are passed on to the interface board. The overcurrent detection circuit and associated PWM control may be configured to be on the gate driver board, but could instead form part of the interface board, or a board which combines the two.

Figure 6 is a flow chart of an overcurrent detection method of the present invention. At step 610 an overcurrent monitor compares an electrical measurement of at least one of a pair of transistors to a threshold. The measurement may be a measurement of voltage to determine the voltage at a drain terminal of a MOSFET. The threshold may be a voltage corresponding to when an overcurrent condition is reached or about to be reached. At step 620 a fault signal is generated when the electrical measurement exceeds the threshold and the overcurrent monitor receives an indication that the voltage converter is turned on. The indication that the voltage converter is turned on may be provided as an ENABLE signal such as from the voltage converter controller or PWM control. If a fault signal is generated, then at step 630 the transistor of the pair of transistors is turned off.

Although we have described above a four MOSFET buck-boost type converter which provides bi-directional power conversion, an alternative converter may be provided that is unidirectional and has only two MOSFETs. Such a converter would be similar to the at shown in figure 3 but would not include MOSFETs 142 and 143. The output from the inductor would be connected directly to the output voltage line V2 across smoothing capacitor C4. This type of converter may be known as a buck type converter. The unidirectional nature of the two MOSFET converter means that power conversion is provided towards the second voltage rail V2. The use of the buck type converter also provides a reduction in voltage at V2 compared to V1.

Although specific embodiments of the invention have been described with reference to the drawings, the skilled person will be aware that variations and modifications may be applied to these embodiments without departing from the scope of the invention as defined in the claims. For example, although we have described the invention in the context of a vehicle, the invention may be applied to domestic and industrial electric power banks. Furthermore, although the invention has been described with reference to a DC-DC voltage converter it is applicable to other converters including inverters, for example inverters used to convert DC voltage to AC for driving an electric motor of a vehicle.

Embodiments of the present invention are set out in the following clauses:
Clause A1. An electric vehicle comprising:
   a motor for propelling the vehicle;
   a battery providing motive electrical power for the motor; and
   a powertrain coupling the motive electrical power from the battery to the motor,
   wherein the powertrain comprises a switched-mode voltage converter arranged to convert voltage of at least a portion of the motive electrical power, the switched-mode voltage converter comprising at least a pair of transistors coupled to an inductor operating as a switched energy storage element for conversion of the voltage, and
   an overcurrent monitor configured to detect an overcurrent condition of at least one of the pair of transistors, the overcurrent monitor configured to compare an electrical measurement of the at least one of the pair of transistors to a threshold and generate a fault signal when the overcurrent monitor receives an indication that the at least one transistor of the pair of transistors is turned on and the electrical measurement exceeds the threshold.
Clause A2. The electric vehicle of clause A1, wherein the overcurrent monitor is further configured to turn off the voltage converter or the at least one transistor of the pair of transistors when the fault signal is generated.
Clause A3. The electric vehicle of clause A1 or clause A2, wherein a voltage converter controller is arranged to control switching of the transistors in the voltage converter, and the voltage converter controller is arranged to send to the overcurrent monitor the indication that the voltage converter is turned on.
Clause A4. The electric vehicle of clause A3, wherein the indication that the voltage converter is turned on comprises a signal windowed between the voltage converter controller turning on the at least one transistor of the pair of transistors of the voltage converter and the voltage converter controller turning off the at least one transistor of the pair of transistors of the voltage converter.
Clause A5. The electric vehicle of clause A4, wherein the signal providing the indication that the voltage converter is turned on is sent after a time delay following the voltage converter controller turning on the at least one transistor of the pair of transistors of the voltage converter.
Clause A6. The electric vehicle of clause A5, wherein the time delay is less than or equal to 20ns, less than or equal to 50ns or less than of equal to 100ns.
Clause A7. The electric vehicle of clause A5 or clause A6, wherein the interval is adjustable.
Clause A8. The electric vehicle of any of clauses A3 to A7, wherein the voltage converter controller is arranged to receive the fault signal from the overcurrent monitor and turn off the at least one transistor of the pair of transistors when the fault signal is received.
Clause A9. The electric vehicle of clause A8, wherein the voltage converter controller is configured to receive or generate a control signal to control turning on and turning off of the at least two transistors in the voltage converter for voltage conversion, and the voltage converter controller comprises logic circuitry arranged to invert the fault signal and perform an AND function on the control signal and the inverted fault signal such that the voltage converter controller turns off the transistor when the fault signal indicates the overcurrent condition.
Clause A10. The electric vehicle of any of clauses A1 to A9, wherein the electrical measurement of the at least one of the pair of transistors comprises a measurement of voltage indicative of the current at an input to the transistor.
Clause A11. The electric vehicle of clause A10, wherein the overcurrent monitor comprises a comparator for comparing the measured voltage to a threshold.
Clause A12. The electric vehicle of clause A10 or A11, wherein the overcurrent monitor comprises a logic gate configured to perform an AND function, the logic gate configured to receive a first input from the comparator and a second input is the indication that the transistor is turned on, wherein the logic gate is configured to provide an output when the electrical measurement exceeds the threshold and the indication that the voltage converter is turned on is received, and the output is the fault signal.
Clause A13. The electric vehicle of any of clauses A10 to A12, wherein the measurement of voltage at the input to the transistor is a measurement of voltage at the drain terminal of the transistor, and optionally the measurement is made through a blocking diode using a voltage divider.
Clause A14. The electric vehicle of any of clauses A1 to A13, wherein the overcurrent monitor is configured to supply a test voltage lower than the voltage conversion voltages to perform the electrical measurement when the electrical power is not supplied to the voltage converter from the battery and test the at least one transistor.
Clause A15. The electric vehicle of clause A14, wherein the test voltage has a magnitude less than 50V.
Clause A16. The electric vehicle of any of clauses A1 to A15, wherein the transistors are MOSFETs, such as SiC MOSFETs.
Clause A17. The electric vehicle of any of clauses A1 to A16, wherein the voltage converter is a buck-boost voltage converter.
Clause A18. The electric vehicle of any of clauses A1 to A17, wherein the voltage converter is a DC-DC converter or an inverter.
Clause B19. A switched-mode voltage converter, comprising:
   at least a pair of transistors coupled to an inductor, the inductor operating as a switched energy storage element for the conversion of the voltage, and
   an overcurrent monitor configured to detect an overcurrent condition of at least one of the pair of transistors, the overcurrent monitor configured to compare an electrical measurement of at least one of the pair of transistors to a threshold and generate a fault signal when the overcurrent monitor receives an indication that the at least one transistor of the pair of transistors is turned on and the electrical measurement exceeds the threshold.
Clause C20. A method of overcurrent control in a switched-mode voltage converter converting of at least a portion of motive electrical power in a powertrain of an electric vehicle, the switched-mode voltage converter comprising at least a pair of transistors coupled to an inductor operating as a switched energy storage element for conversion of the voltage, the method comprising:
   comparing an electrical measurement of at least one of the pair of transistors to a threshold;
   generating a fault signal when an enable signal indicates that the at least one of the pair of transistors is turned on and the electrical measurement exceeds the threshold.
Clause C21. The method of clause C20, further comprising turning off the at least one of the pair of transistors when the fault signal is generated.

## Claims

1. An electric vehicle comprising:
a motor for propelling the vehicle;
a battery providing motive electrical power for the motor; and
a powertrain coupling the motive electrical power from the battery to the motor,
wherein the powertrain comprises a switched-mode voltage converter arranged to convert voltage of at least a portion of the motive electrical power, the switched-mode voltage converter comprising at least a pair of transistors coupled to an inductor operating as a switched energy storage element for conversion of the voltage, and
an overcurrent monitor configured to detect an overcurrent condition of at least one of the pair of transistors, the overcurrent monitor configured to compare an electrical measurement of the at least one of the pair of transistors to a threshold and generate a fault signal when the overcurrent monitor receives an indication that the at least one transistor of the pair of transistors is turned on and the electrical measurement exceeds the threshold.

2. The electric vehicle of claim 1, wherein the overcurrent monitor is further configured to turn off the voltage converter or the at least one transistor of the pair of transistors when the fault signal is generated.

3. The electric vehicle of claim 1 or claim 2, wherein a voltage converter controller is arranged to control switching of the transistors in the voltage converter, and the voltage converter controller is arranged to send to the overcurrent monitor the indication that the voltage converter is turned on.

4. The electric vehicle of claim 3, wherein the indication that the voltage converter is turned on comprises a signal windowed between the voltage converter controller turning on the at least one transistor of the pair of transistors of the voltage converter and the voltage converter controller turning off the at least one transistor of the pair of transistors of the voltage converter.

5. The electric vehicle of claim 4, wherein the signal providing the indication that the voltage converter is turned on is sent after a time delay following the voltage converter controller turning on the at least one transistor of the pair of transistors of the voltage converter.

6. The electric vehicle of claim 5, wherein the time delay is less than or equal to 20ns, less than or equal to 50ns or less than of equal to 100ns, and/or
wherein the time delay is adjustable.

7. The electric vehicle of any of claims 3 to 6, wherein the voltage converter controller is arranged to receive the fault signal from the overcurrent monitor and turn off the at least one transistor of the pair of transistors when the fault signal is received.

8. The electric vehicle of claim 7, wherein the voltage converter controller is configured to receive or generate a control signal to control turning on and turning off of the at least two transistors in the voltage converter for voltage conversion, and the voltage converter controller comprises logic circuitry arranged to invert the fault signal and perform an AND function on the control signal and the inverted fault signal such that the voltage converter controller turns off the transistor when the fault signal indicates the overcurrent condition.

9. The electric vehicle of any preceding claim, wherein the electrical measurement of the at least one of the pair of transistors comprises a measurement of voltage indicative of the current at an input to the transistor.

10. The electric vehicle of claim 9, wherein the overcurrent monitor comprises a comparator for comparing the measured voltage to a threshold.

11. The electric vehicle of claim 9 or 10, wherein the overcurrent monitor comprises a logic gate configured to perform an AND function, the logic gate configured to receive a first input from the comparator and a second input is the indication that the transistor is turned on, wherein the logic gate is configured to provide an output when the electrical measurement exceeds the threshold and the indication that the voltage converter is turned on is received, and the output is the fault signal.

12. The electric vehicle of any of claims 9 to 11, wherein the measurement of voltage at the input to the transistor is a measurement of voltage at the drain terminal of the transistor, and optionally the measurement is made through a blocking diode using a voltage divider.

13. The electric vehicle of any preceding claim, wherein the overcurrent monitor is configured to supply a test voltage lower than the voltage conversion voltages to perform the electrical measurement when the electrical power is not supplied to the voltage converter from the battery and test the at least one transistor, and
optionally, the test voltage has a magnitude less than 50V.

14. The electric vehicle of any preceding claim, wherein the voltage converter is configured comprising one or more or the following:
the transistors are MOSFETs, such as SiC MOSFETs;
the voltage converter is a buck-boost voltage converter; and/or
the voltage converter is a DC-DC converter or an inverter.

15. A method of overcurrent control in a switched-mode voltage converter converting of at least a portion of motive electrical power in a powertrain of an electric vehicle, the switched-mode voltage converter comprising at least a pair of transistors coupled to an inductor operating as a switched energy storage element for conversion of the voltage, the method comprising:
comparing an electrical measurement of at least one of the pair of transistors to a threshold;
generating a fault signal when an enable signal indicates that the at least one of the pair of transistors is turned on and the electrical measurement exceeds the threshold.
